# FASCICULE DE BREVET EUROPEEN

(11) **EP 0 466 077 B1**
(45) Date de publication et mention de la délivrance du brevet: **28.02.1996**
(21) Numéro de dépôt: 91111353.8
(22) Date de dépôt: 08.07.1991
(51) Int. Cl.: G02B 6/38, G02B 6/255

(54) **Procédé de jonction d'un câble optique à tube de protection de fibre à une fiche ou épissure de raccordement**
Verbindungsverfahren eines optischen Kabels an ein Schutzröhrchen für einen Steckerstift bzw. eine Spleissverbindung
Method of connecting an optical cable to a protection tube for a ferrule or splice connection

(30) Priorité: 11.07.1990 FR 9008836
(43) Date de publication de la demande: 15.01.1992
(73) Titulaire: FILOTEX S.A. dite, F-91210 Draveil (FR)
(72) Inventeur: Raimbeaux, Jean-Michel, F-08230 Rocroi (FR); Thominet, Gérard, F-08170 Fumay (FR)
(74) Mandataire: Weinmiller, Jürgen

(56) Documents cités:
- US-A- 4 333 705
- PATENT ABSTRACTS OF JAPAN, vol. 8, no. 23 (P-251)[1460], 31 janvier 1984 & JP-A-58 181 006
- PATENT ABSTRACTS OF JAPAN, vol. 14, no. 128 (P-1019)[4071], 9 mars 1990 & JP-A-1 319 711

## Description

La présente invention concerne un procédé de jonction d'un câble optique contenant au moins une fibre optique disposée à l'intérieur d'un tube de protection à une fiche de connecteur, ou épissure ou autre pièce de raccordement.

D'une manière générale, lorsque le diamètre intérieur ou extérieur du tube de protection n'est pas adapté au diamètre extérieur ou intérieur de la fiche de connecteur, ou épissure ou autre pièce de raccordement, on utilise un manchon d'adaptation des diamètres concernés.

L'abrégé du document JP-A-1 319 711, Patent Abstracts of Japan, vol.14, n°128 (P-1019) [1460] montre une telle jonction réalisée à l'aide d'un manchon adaptateur, qui est glissé et fixé à l'intérieur d'une fiche après ou avant avoir inséré et fixé le tube de protection dans ce manchon adaptateur.

Un tel procédé nécessite deux opérations d'insertion et fixation, effectuées entre le manchon d'adaptation et le tube d'une part, la fiche de connexion, épissure ou autre pièce d'autre part, entrainant des manipulations assez délicates, compte tenu des faibles diamètres en cause, de l'ordre du millimètre. Il ne donne en tout état de cause un résultat satisfaisant que lorsque les diamètres en cause ne sont pas trop différents.

La présente invention a pour but d'assurer une telle jonction de façon simple et rapide, même lorsque les diamètres internes de la fiche de connexion ou de l'épissure et du tube de protection sont très différents.

Selon l'invention, le procédé de jonction d'un câble optique, contenant au moins une fibre optique disposée à l'intérieur d'un tube de protection, à une fiche de connecteur, ou une épissure, ou autre pièce de connexion, le diamètre externe du tube de protection étant supérieur au diamètre interne d'une extrémité de la fiche de connecteur, épissure ou autre pièce de connexion, est caractérisé en ce que l'on rétreint une extrémité du tube de protection à un diamètre externe un peu inférieur au diamètre interne de l'extrémité de la fiche de connecteur, épissure ou autre pièce de connexion, puis engage l'extrémité du tube de protection dans l'extrémité de la fiche de connecteur, de l'épissure, ou bien de la pièce de connexion.

Selon l'invention également, le procédé de jonction d'un câble optique, contenant au moins une fibre optique disposée à l'intérieur d'un tube de protection, à une fiche de connecteur, ou une épissure, ou autre pièce de connexion, le diamètre interne du tube de protection étant inférieur au diamètre externe d'une extrémité de la fiche de connecteur, épissure ou autre pièce de connexion, est caractérisé en ce que l'on élargit une extrémité du tube de protection à un diamètre interne un peu supérieur au diamètre externe de l'extrémité de la fiche de connecteur, épissure ou autre pièce de connexion, puis engage l'extrémité du tube de protection autour de l'extrémité de la fiche de connecteur, de l'épissure, ou bien de la pièce de connexion.

Il est décrit ci-après à titre d'exemples des procédés de jonction d'un tube de câble optique à fibre unique à une fiche de connecteur optique selon la technique connue et selon le procédé de l'invention.

La figure 1 représente la jonction selon la technique connue d'un tube à une fiche de connecteur de diamètre interne inférieur au diamètre externe du tube, à l'aide d'une pièce d'adaptation.

La figure 2 représente la jonction d'un tube à une pièce de raccordement de diamètre interne inférieur au diamètre externe du tube selon l'invention.

La figure 3 représente la jonction d'un tube à une pièce de raccordement de diamètre externe supérieur au diamètre interne du tube selon l'invention.

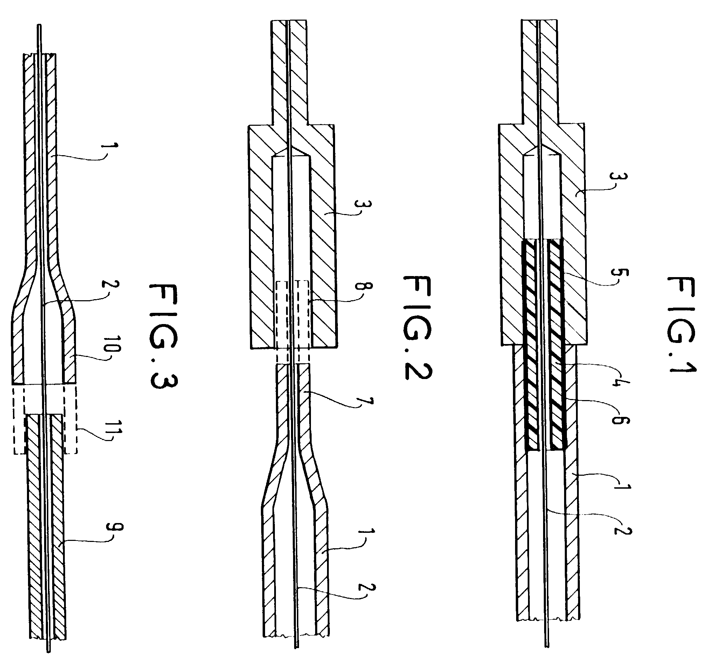

Dans la figure 1, le tube de câble optique 1, entourant une fibre optique 2, est raccordé à une fiche de connecteur 3, de diamètre interne inférieur au diamètre externe du tube, grâce à un manchon d'adaptation 4, de diamètre externe légèrement inférieur au diamètre interne de la fiche de connecteur. Avant introduction du manchon d'adaptation dans l'extrémité du tube et dans celle de la fiche de connecteur, il y a lieu de munir la surface externe du manchon d'une couche d'adhésif, de façon à assurer le maintien en place de ce manchon sur les pièces à réunir par deux zones de collage 5 et 6.

Dans la figure 2, le tube de protection 1 est soumis à un rétreint d'une zone d'extrémité 7 jusqu'à un diamètre externe légèrement inférieur au diamètre interne de la fiche de connecteur, sur une longueur suffisante pour assurer un maintien en place sûr de la jonction, puis engagé dans celle-ci (position 8 en traits interrompus). Ce rétreint peut s'effectuer par des moyens connus, qui diffèreront selon que le tube est métallique (par ex. jeu de galets de rétreinte) ou en matière thermoplastique (par ex. échauffement, puis introduction dans une filière).

Dans le cas d'un tube thermoplastique l'opération est facilitée en chauffant la partie à rétrécir pendant l'étirage. Le diamètre intérieur du tube rétréci peut être fixé avec plus de précision en introduisant un manchon métallique de diamètre extérieur adéquat, à l'intérieur du tube thermoplastique ; ce manchon est retiré après rétrécissement.

Dans la figure 3, le tube de protection 1 est soumis avant mise en place à un évasement de son extrémité 10 jusqu'à un diamètre interne supérieur au diamètre externe de la pièce de connexion 9, puis engagé autour de l'extrémité de celle-ci (position en traits interrompus 11). L'évasement de l'extrémité du tube peut s'effectuer également à l'aide de galets du genre de galets de dudgeonnage (tube métallique) ou au contraire par échauffement, puis introduction d'une tige cylindro-conique (tube en matière thermoplastique).

Il peut être utile de renforcer la connexion par collage de l'extrémité du tube dans ou autour de l'extrémité de la fiche de connexion, mais celui-ci s'effectue dans des conditions beaucoup plus faciles que celui d'un manchon interne.

## Revendications

1. Procédé de jonction d'un câble optique, contenant au moins une fibre optique (2) disposée à l'intérieur d'un tube de protection (1), à une fiche de connecteur, ou une épissure, ou autre pièce de connexion (3), le diamètre externe du tube de protection (1) étant supérieur au diamètre interne d'une extrémité de la fiche de connecteur, épissure ou autre pièce de connexion (3), caractérisé en ce que l'on rétreint une extrémité (7) du tube de protection (1) à un diamètre externe un peu inférieur au diamètre interne de l'extrémité de la fiche de connecteur, épissure ou autre pièce de connexion (3), puis engage l'extrémité (7) du tube de protection (1) dans l'extrémité de la fiche de connecteur, de l'épissure, ou bien de la pièce de connexion (3).

2. Procédé de jonction d'un câble optique, contenant au moins une fibre optique (2) disposée à l'intérieur d'un tube de protection (1), à une fiche de connecteur, ou une épissure, ou autre pièce de connexion (9), le diamètre interne du tube de protection (1) étant inférieur au diamètre externe d'une extrémité de la fiche de connecteur, épissure ou autre pièce de connexion (9), caractérisé en ce que l'on élargit une extrémité (10) du tube de protection (1) à un diamètre interne un peu supérieur au diamètre externe de l'extrémité de la fiche de connecteur, épissure ou autre pièce de connexion (9), puis engage l'extrémité du tube de protection (1) autour de l'extrémité de la fiche de connecteur, de l'épissure, ou bien de la pièce de connexion (9).

3. Procédé de jonction selon la revendication 1 ou 2, caractérisé en ce que l'on maintient ladite extrémité (7, 10) du tube de protection (1) engagée en place dans ou autour de ladite extrémité de la fiche de connecteur, épissure ou autre pièce de connexion (3, 9) par collage.

## Patentansprüche

1. Verfahren zur Verbindung eines Lichtleitkabels, das mindestens eine Lichtleitfaser (2) aufweist, die sich im Inneren eines Schutzrohrs (1) befindet, mit einem Steckverbinder oder einer Spleißstelle oder einem anderen Anschlußteil (3), wobei der Außendurchmesser des Schutzrohrs (1) größer ist als der Innendurchmesser eines Endes des Steckverbinders, der Spleißstelle oder des anderen Anschlußteils (3), dadurch gekennzeichnet, daß man ein Ende (7) des Schutzrohrs (1) auf einen Außendurchmesser schrumpft, der geringfügig kleiner ist als der Innendurchmesser des Endes des Steckverbinders, der Spleißstelle oder des anderen Anschlußteils (3), und daß man dann das Ende (7) des Schutzrohrs (1) in das Ende des Steckverbinders, der Spleißstelle oder des Anschlußteils (3) einführt.

2. Verfahren zur Verbindung eines Lichtleitkabels, das mindestens eine Lichtleitfaser (2) aufweist, die sich im Inneren eines Schutzrohrs (1) befindet, mit einem Steckverbinder oder einer Spleißstelle oder einem anderen Anschlußteil (9), wobei der Innendurchmesser des Schutzrohrs (1) kleiner ist als der Außendurchmesser eines Endes des Steckverbinders, der Spleißstelle oder des anderen Anschlußstücks (9), dadurch gekennzeichnet, daß man ein Ende (10) des Schutzrohrs (1) auf einen Innendurchmesser erweitert, der geringfügig größer ist als der Außendurchmesser des Endes des Steckverbinders, der Spleißstelle oder des anderen Anschlußteils (9), und daß man dann das Ende des Schutzrohrs (1) auf das Ende des Steckverbinders, der Spleißstelle oder des Anschlußteils (9) aufschiebt.

3. Verbindungsverfahren nach Anspruch 1 oder 2, dadurch gekennzeichnet, daß man das Ende (7, 10) des Schutzrohrs (1) durch Kleben in dem oder auf dem Ende des Steckverbinders, der Spleißstelle oder des anderen Anschlußteils (3, 9) fixiert.

## Claims

1. Method of jointing an optical cable containing at least one optical fibre (2) inside a protective tube (1) to a connector plug, splice or other connection member (3), the outside diameter of the protective tube (1) being greater than the inside diameter of an end of the connector plug, splice or other connection member (3) characterised in that one end (7) of the protective tube (1) is shrunk to an outside diameter slightly less than the inside diameter of the end of the connector plug, splice or other connection member (3) and then the end (7) of the protective tube (1) is inserted in the end of the connector plug, splice or other connection member (3).

2. Method of jointing an optical cable containing at least one optical fibre (2) inside a protective tube (1) to a connector plug, splice or other connection member (9), the inside diameter of the protective tube (1) being less than the outside diameter of an end of the connector plug, splice or other connection member (9), characterised in that an end (10) of the protective tube (1) is enlarged to an inside diameter slightly greater than the outside diameter of the end of the connector plug, splice or other connection member (9) and then the end of the protective tube (1) is fitted around the end of the connector plug, splice or other connection member (9).

3. Jointing method according to claim 1 or claim 2 characterised in that said end (7, 10) of the protective tube (1) is glued in place in or around said end of the connector plug, splice or other connection member (3, 9).
